# EUROPEAN PATENT APPLICATION

(11) **EP 4 681 974 A2**
(43) Date of publication of application: **21.01.2026**
(21) Application number: 25180511.5
(22) Date of filing: 03.06.2025
(51) Int. Cl.: B60L 15/20

(54) **VEHICLE**

(30) Priority: 16.07.2024 JP 2024113230
(71) Applicant: TOYOTA JIDOSHA KABUSHIKI KAISHA, Toyota-shi, Aichi-ken 471-8571 (JP)
(72) Inventor: IMAMURA, Tatsuya, TOYOTA-SHI, AICHI-KEN, 471-8571 (JP); ISAMI, Yoichiro, TOYOTA-SHI, AICHI-KEN, 471-8571 (JP); MOTEKI, Taro, TOYOTA-SHI, AICHI-KEN, 471-8571 (JP); OKAMURA, Yukari, TOYOTA-SHI, AICHI-KEN, 471-8571 (JP)
(74) Representative: Cabinet Beau de Loménie

(57) **Abstract**

A vehicle (100) including an electric motor (4), a pseudo clutch operation device (25), a shift operation device (24), and a single or plurality of processors (102) is provided. The electric motor (4) is a drive source of the vehicle (100). The shift operation device (24) is configured to be operated for selecting a gear stage. The single or plurality of processors (102) is configured to simulate a drive characteristic of a virtual vehicle by changing a motor torque of the electric motor (4) in response to at least operation of the pseudo clutch operation device (25) and operation of the shift operation device (24). The single or plurality of processors (102) is configured to permit alteration of the gear stage to a specific gear stage regardless of whether the pseudo clutch operation device (25) is operated, the specific gear stage depending on a motor rotation speed of the electric motor (4).

## Description

### BACKGROUND OF THE INVENTION

### 1. Field of the Invention

The present disclosure relates to a vehicle that includes an electric motor as a drive source.

### 2. Description of Related Art

An electric motor can adjust the motor torque that is output, by controlling the applied voltage or field. Using this, in recent years, there has been proposed a technology that allows gear change by driver's manual operation in a vehicle that includes an electric motor as a drive source.

For example, Japanese Patent No. 6787507 (JP 6787507 B) discloses a battery electric vehicle that reproduces a manual gear-change action of a manual transmission vehicle in a pseudo manner. The battery electric vehicle disclosed in JP 6787507 B includes a shift lever that is operated by a driver and by which the operation of a transmission is simulated, a clutch pedal that is operated by the driver at the time of the operation of the shift lever and by which the operation of a clutch mechanism is simulated, and a torque control unit that controls the torque of a rotating machine of the battery electric vehicle. The torque control unit controls the torque of the rotating machine based on a signal including the operation amount of the clutch pedal and a signal including a mode selected by the shift lever.

### SUMMARY OF THE INVENTION

JP 6787507 B discloses that the driver depresses the clutch pedal, performs, in this state, gear change (the selection of a mode) by operating the shift lever, and thereafter returns the clutch pedal, so that the pseudo manual gear-change action is performed in the battery electric vehicle. However, when the three operations are necessary for the gear change even though the vehicle includes no real clutch, the gear change becomes slow.

A first aspect of the present disclosure relates to a vehicle including an electric motor, a pseudo clutch operation device, a shift operation device, and a single or plurality of processors. The electric motor is a drive source for the vehicle. The shift operation device is configured to be operated for selecting a gear stage. The single or plurality of processors is configured to simulate a drive characteristic of a virtual vehicle by changing a motor torque of the electric motor in response to at least operation of the pseudo clutch operation device and operation of the shift operation device. Moreover, the single or plurality of processors is configured to permit alteration of the gear stage to a specific gear stage regardless of whether the pseudo clutch operation device is operated, the specific gear stage depending on a motor rotation speed of the electric motor.

With the vehicle in the first aspect, the alteration of the gear stage to the specific gear stage depending on the motor rotation speed of the electric motor is permitted regardless of whether the pseudo clutch operation device is operated. Thereby, even when the pseudo clutch operation device is not operated, the gear change can be performed simply by the operation of the shift operation device, so that the driver can quickly perform the gear change. As a result, it is possible to improve the drivability of the vehicle. Further, since the alteration of the gear stage to the specific gear stage depending on the motor rotation speed of the electric motor is permitted, it is possible to secure the stability of the behavior of the vehicle.

A second aspect of the present disclosure relates to a vehicle including an electric motor, a pseudo clutch operation device, a shift operation device, and a single or plurality of processors. The electric motor is a drive source for the vehicle. The shift operation device is configured to be operated for selecting a gear stage. The single or plurality of processors is configured to simulate a drive characteristic of a virtual vehicle by changing a motor torque of the electric motor in response to at least operation of the pseudo clutch operation device and operation of the shift operation device. Moreover, the single or plurality of processors is configured to perform overshoot or undershoot of the motor torque from a first timing for a first time period, when the gear stage is altered from a neutral to a first gear stage at the first timing without the operation of the pseudo clutch operation device.

With the vehicle in the second aspect, when the gear stage is altered from the neutral to the first gear stage at the first timing without the operation of the pseudo clutch operation device, the overshoot or undershoot of the motor torque is performed from the first timing for the first time period. Accordingly, since the overshoot or undershoot of the motor torque is performed, the driver can quickly perform the gear change, even when the pseudo clutch operation device is not operated. As a result, it is possible to improve the drivability of the vehicle.

A third aspect of the present disclosure relates to a vehicle including an electric motor, a pseudo clutch operation device, a shift operation device, and a single or plurality of processors. The electric motor is a drive source for the vehicle. The shift operation device is configured to be operated for selecting a gear stage. The single or plurality of processors is configured to simulate a drive characteristic of a virtual vehicle by changing a motor torque of the electric motor in response to at least operation of the pseudo clutch operation device and operation of the shift operation device. Moreover, the virtual vehicle includes a virtual engine. Furthermore, the single or plurality of processors is configured to change a virtual engine speed of the virtual engine at a first angular acceleration from a first timing for a first time period, when the gear stage is altered from a neutral to a first gear stage at the first timing without the operation of the pseudo clutch operation device.

With the vehicle in the third aspect, thevirtual vehicle includes the virtual engine. Moreover, the single or plurality of processors changes the virtual engine speed of the virtual engine at the first angular acceleration from the first timing for the first time period, when the gear stage is altered from the neutral to the first gear stage at the first timing without the operation of the pseudo clutch operation device. Accordingly, the driver can quickly perform the gear change, even when the pseudo clutch operation device is not operated. As a result, it is possible to improve the drivability of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram schematically showing the configuration of a vehicle according to a first embodiment of the present disclosure;
FIG. 2 is a diagram showing a functional configuration of a control device that is related to a drive control of the vehicle;
FIG. 3 is a diagram showing an exemplary configuration of a vehicle model of the vehicle;
FIG. 4 is a diagram showing a functional configuration of the control device that is related to a sound control of the vehicle;
FIG. 5A is a diagram showing a time chart of a gear change operation in the vehicle according to the first embodiment;
FIG. 5B is a diagram showing a time chart of a gear change operation in the vehicle according to the first embodiment;
FIG. 6 is a diagram showing an example of a specific gear stage depending on a motor rotation speed of an electric motor shown in FIG. 1;
FIG. 7 is a flowchart showing a processing flow that is executed by a processor of the control device for the switching between permission and non-permission about the alteration of a gear stage by a shift operation device of the vehicle;
FIG. 8 is a diagram showing a comparative example of a time chart when the alteration of the gear stage by the shift operation device is performed without the operation of a pseudo clutch operation device shown in FIG. 1;
FIG. 9 is a diagram showing another comparative example of the time chart when the alteration of the gear stage by the shift operation device is performed without the operation of the pseudo clutch operation device;
FIG. 10 is a flowchart showing a processing flow of a gear shift process that is executed by a motor torque calculation unit shown in FIG. 2;
FIG. 11 is a diagram showing an example of a first angular acceleration map that is used in the setting of an angular acceleration in the flowchart shown in FIG. 10;
FIG. 12 is a diagram showing a time chart when the gear shift process is executed to the comparative example shown in FIG. 8;
FIG. 13 is a diagram showing a time chart when the gear shift process is executed to the comparative example shown in FIG. 9; and
FIG. 14 is a diagram schematically showing the configuration of a vehicle including a transmission according to a second embodiment.

### DETAILED DESCRIPTION OF EMBODIMENTS

A first embodiment and a second embodiment of the present disclosure will be described below with reference to the accompanying drawings. Identical or corresponding constituents will be denoted by identical reference characters in the figures, and descriptions thereof will be simplified or omitted.

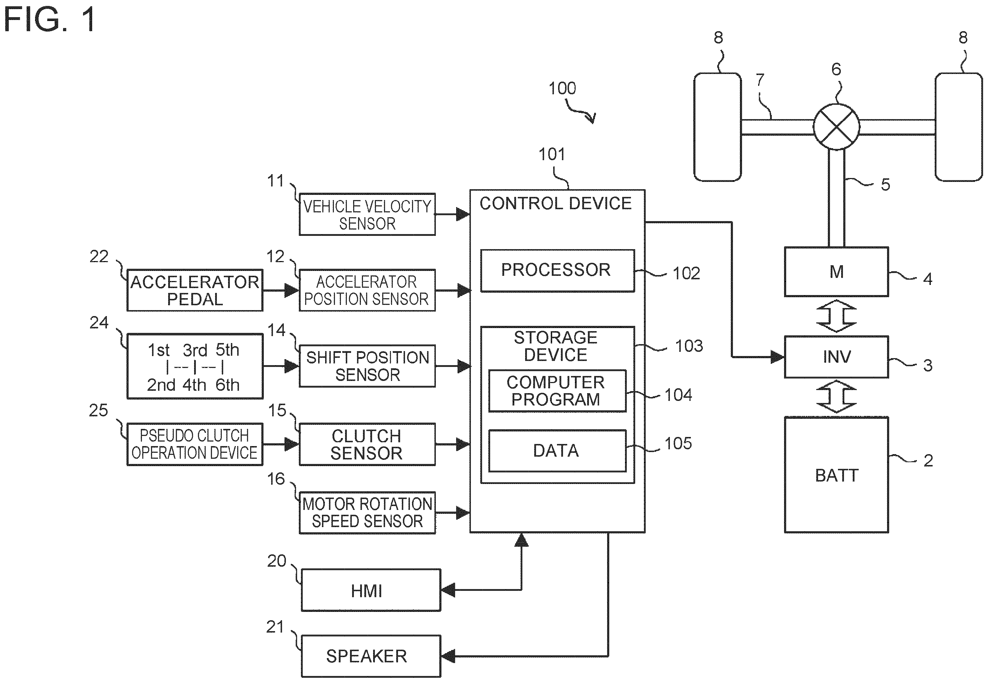

First, the configuration of a dynamic power system of a vehicle according to the first embodiment will be described. FIG. 1 is a diagram schematically showing the configuration of a vehicle 100 according to the first embodiment of the present disclosure. First, the configuration of the dynamic power system of the vehicle 100 will be described with reference to FIG. 1.

The vehicle 100 includes an electric motor (M) 4 as a drive source. For example, the electric motor 4 is a three-phase alternating-current motor. An inverter (INV) 3 is attached to the electric motor 4. An output shaft of the electric motor 4 is connected to a propeller shaft 5 through an unillustrated speed reducer. The propeller shaft 5 is connected to a differential gear 6. The differential gear 6 is connected to right and left drive wheels 8 by right and left drive shafts 7. The drive wheels 8 may be front wheels, or may be rear wheels. The inverter 3, the electric motor 4, the speed reducer, and the differential gear 6 may be integrally constituted as an e-axle. In this case, the vehicle 100 does not include the propeller shaft 5, and the e-axle is connected to the drive shafts 7. Further, as another modification, the vehicle 100 may be configured as a four-wheel-drive vehicle. For example, the vehicle 100 may include a transfer that is connected to the electric motor 4, and the output of the electric motor 4 may be distributed to the front wheels and the rear wheels by the transfer. Further, for example, the vehicle 100 may be configured such that the e-axle is included in each of a front drive shaft and a rear drive shaft.

The inverter 3 is connected to a battery (BATT) 2. The inverter 3 is a voltage-type inverter, for example, and controls the motor torque of the electric motor 4 by a PWM control. That is, the vehicle 100 travels using the electric energy that is stored in the battery 2 while the electric motor 4 is adopted as the drive source. Typically, the vehicle 100 is a battery electric vehicle (BEV). However, the vehicle 100 is not limited to the BEV, and only needs to be a vehicle that is driven by the electric motor 4. For example, the vehicle 100 may be a hybrid electric vehicle (HEV), a plug-in hybrid electric vehicle (PHEV), or a fuel cell electric vehicle (FCEV).

Next, the configuration of a control system of the vehicle according to the first embodiment will be described. The control system will be described with reference to FIG. 1 schematically showing the configuration of the control system of the vehicle 100 according to the first embodiment.

The vehicle 100 includes a vehicle velocity sensor 11. The vehicle velocity sensor 11 outputs a signal indicating the vehicle velocity of the vehicle 100. At least one of unillustrated wheel speed sensors respectively provided at the right and left front wheels and the right and left rear wheels is used as the vehicle velocity sensor 11.

Further, the vehicle 100 includes an accelerator position sensor 12. The accelerator position sensor 12 is provided at an accelerator pedal 22, and outputs a signal indicating the operation amount of the accelerator pedal 22, that is, the accelerator operation amount. Instead of the accelerator pedal 22, the vehicle 100 may include a lever-type accelerator operation device or a dial-type accelerator operation device that is operated by hand. Even in this case, the accelerator position sensor 12 outputs the signal indicating the accelerator operation amount.

The accelerator pedal 22 is a driving operation member that is used for the driving of the vehicle 100. In addition to the accelerator pedal 22, the driving operation member includes a brake operation device that is operated for the braking of the vehicle 100. Furthermore, the vehicle 100 is configured to allow gear change by driver's manual operation. Therefore, the vehicle 100 includes a shift operation device 24 and a pseudo clutch operation device 25 described below, separately from the driving operation members.

The shift operation device 24 is operated for selecting a gear stage. For example, the shift operation device 24 is an H-shaped shifter. The H-shaped shifter includes a shift lever, and is configured such that the shift lever can be moved along gates that constitute an H-shape. To each gate, a gear stage is assigned. In the H-shaped shifter, the shift lever is operated from the position of a neutral to the position of a particular gate, and thereby, the operation for selecting the gear stage is performed. In an example shown in FIG. 1, 1st, 2nd, 3rd, 4th, 5th, and 6th gear stages are provided as gear stages that are selectable by the shift operation device 24. The shift operation device 24 may be in a neutral state where no gear stage is selected.

The vehicle 100 includes a shift position sensor 14. The shift position sensor 14 is provided at the shift operation device 24, and outputs a signal indicating the gear stage selected by the shift operation device 24. When the shift operation device 24 is in the neutral state, the shift position sensor 14 outputs a signal indicating that the shift operation device 24 is in the neutral state.

The pseudo clutch operation device 25 is a device for reproducing clutch operation. For example, the pseudo clutch operation device 25 is a pseudo clutch pedal that simulates a clutch pedal included in a conventional manual transmission vehicle. For example, the pseudo clutch pedal includes a reaction force mechanism that generates reaction force against the depression by the driver. A start position of the pseudo clutch pedal is a position when depressing force is not given, and a termination position of the pseudo clutch pedal is a position when the pseudo clutch pedal is depressed to an innermost portion. The driver can operate the pseudo clutch pedal from the start position to the termination position against the reaction force from the reaction force mechanism. In addition, the pseudo clutch operation device 25 may be a lever-type operation device or a dial-type operation device that is operated by hand. For the pseudo clutch operation device 25, various structures can be employed, as long as the driver can operate the pseudo clutch operation device 25 from the start position to the termination position against the reaction force and can have, through the foot or hand, such an operational feeling that the clutch pedal included in the conventional manual transmission vehicle is operated.

The vehicle 100 includes a clutch sensor 15. The clutch sensor 15 is provided at the pseudo clutch operation device 25, and outputs a signal indicating the operation amount of the pseudo clutch operation device 25, that is, the clutch operation amount. The vehicle 100 includes no real clutch, and therefore, the clutch operation amount is a virtual clutch operation amount.

The vehicle 100 includes a motor rotation speed sensor 16. The motor rotation speed sensor 16 is provided at the electric motor 4, and outputs a signal indicating a motor rotation speed of the electric motor 4.

Further, the vehicle 100 includes a human-machine interface (HMI) 20. The HMI 20 presents a variety of information to a user by display or sound, and accepts a variety of inputs from the user. The HMI 20 is constituted by a display (e.g.; a multi-information display or a meter display), a switch, a microphone, a touch pad, a touch screen, and the like. For example, the HMI 20 displays a variety of information on the display, and accepts user's input about the displayed content by the operation of the switch. Further, for example, the HMI 20 displays a variety of information on the touch screen, and accepts user's input about the displayed content by the touch operation on the touch screen.

Further, the vehicle 100 includes a single or plurality of speakers 21. For example, the speaker 21 is a vehicle-interior speaker that outputs sound to the interior of a vehicle cabin of the vehicle 100. As another example, the speaker 21 may be a vehicle-exterior speaker that outputs sound to the exterior of the vehicle 100. The vehicle 100 may include both the vehicle-interior speaker and the vehicle-exterior speaker, as the speaker 21. The speaker 21 may be configured as a part of the HMI 20.

The vehicle 100 includes a control device 101. Various sensors and controlled apparatuses that are equipped in the vehicle 100 are connected to the control device 101 by an in-vehicle network such as a control area network (CAN). Various sensors other than the vehicle velocity sensor 11, the accelerator position sensor 12, the shift position sensor 14, the clutch sensor 15, and the motor rotation speed sensor 16 may be equipped in the vehicle 100, and may be connected to the control device 101 through the in-vehicle network.

The control device 101 generates control signals for various controls of the vehicle 100, based on signals acquired from the sensors. Typically, the control device 101 is an electronic control unit (ECU). The control device 101 may be a combination of a plurality of ECUs. The control device 101 includes a single or plurality of processors 102 (referred to as merely a processor 102, hereinafter) and a single or plurality of storage devices 103 (referred to as merely a storage device 103, hereinafter).

The processor 102 executes various processes. For example, the processor 102 is constituted by a general-purpose processor, an application specific processor, a central processing unit (CPU), a graphics processing unit (GPU), an application specific integrated circuit (ASIC), a field-programmable gate array (FPGA), an integrated circuit, a conventional circuit, and a single or plurality of combinations of them. The processor 102 can be called a circuitry or a processing circuitry. The circuitry is hardware that has programs for realizing functions of the control device 101 or hardware that executes functions of the control device 101.

The storage device 103 stores a variety of information that is necessary for the processor 102 to execute processes. For example, the storage device 103 is constituted by a recording medium such as a random-access memory (RAM), a read-only memory (ROM), a solid-state drive (SSD), and a hard disk drive (HDD). The storage device 103 stores a computer program 104 that can be executed by the processor 102, and a variety of data 105. The computer program 104 is constituted by a plurality of instruction codes in which processes to be executed by the processor 102 are written. The computer program 104 is recorded in a computer-readable recording medium. Functions of the control device 101 are realized by the cooperation between the processor 102 that executes the computer program 104 and the storage device 103.

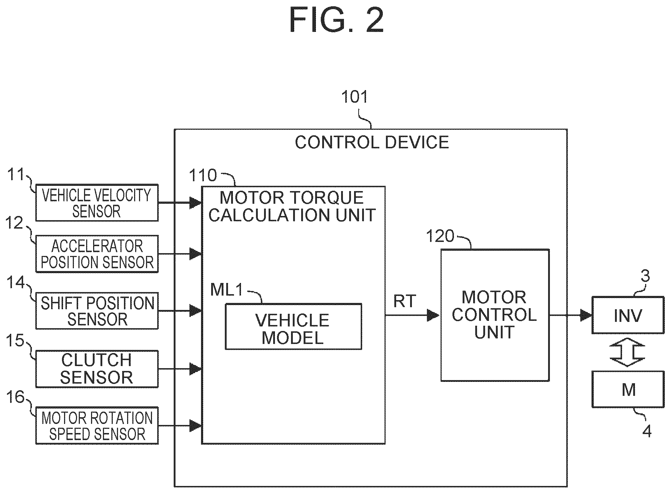

Next, a drive control of the vehicle according to the first embodiment will be described. The control device 101 performs the drive control of the vehicle 100 by controlling the electric motor 4. FIG. 2 is a block diagram showing a functional configuration of the control device 101 that is related to the drive control of the vehicle 100. The control device 101 includes a motor torque calculation unit 110 and a motor control unit 120, as functional blocks. The functional blocks are realized by the cooperation between the processor 102 and the storage device 103. Information necessary for the execution of processes is stored in the storage device 103 as the data 105.

The motor torque calculation unit 110 calculates a required motor torque RT that is required in the electric motor 4, in response to the operation of the accelerator pedal 22, the shift operation device 24, and the pseudo clutch operation device 25. The motor torque calculation unit 110 receives signals from the vehicle velocity sensor 11, the accelerator position sensor 12, the shift position sensor 14, the clutch sensor 15, and the motor rotation speed sensor 16.

The drive control of the vehicle 100 by the control device 101 is performed such that a drive characteristic of a manual gear-change-type virtual vehicle is simulated. Therefore, in the calculation of the required motor torque RT by the motor torque calculation unit 110, a vehicle model ML1 in which the virtual vehicle to be simulated is modeled is used. Typically, the virtual vehicle is a manual transmission vehicle in which an internal combustion engine is used as a drive source (engine). As the virtual vehicle to be simulated, vehicles including various drive sources (engines) such as an electric motor, a hydraulic motor, and a steam engine can be adopted.

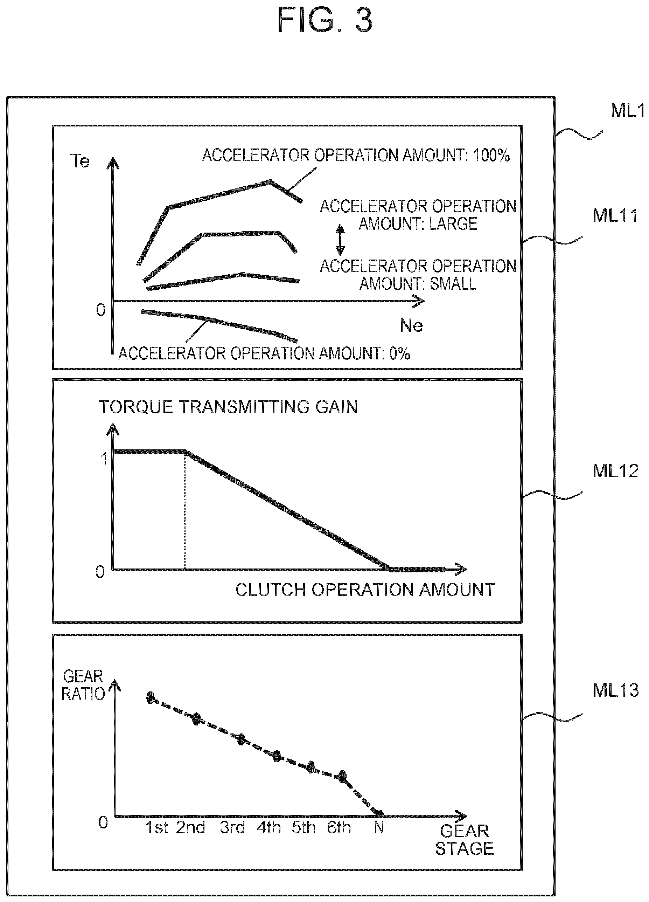

As shown in FIG. 3, the vehicle model ML1 includes an engine model ML11, a clutch model ML12, and a transmission model ML13. In the engine model ML11, a virtual engine of the virtual vehicle is modeled. In the clutch model ML12, a virtual clutch of the virtual vehicle is modeled. In the transmission model ML13, a virtual transmission of the virtual vehicle is modeled. The vehicle model ML1 can be regarded as a plant model of a virtual powertrain of the virtual vehicle.

The vehicle model ML1 is previously generated, and is stored in the storage device 103 as the data 105. Particularly, a plurality of vehicle models ML1 corresponding to a plurality of kinds of virtual vehicles may be stored in the storage device 103. Moreover, the motor torque calculation unit 110 may read the vehicle model ML1 that is used, from the vehicle models ML1. The control device 101 may accept user's selection input for selecting one of the kinds of the virtual vehicles, through the HMI 20. In this case, the motor torque calculation unit 110 may be configured to read the vehicle model ML1 corresponding to the selected virtual vehicle.

The engine model ML11 calculates a virtual engine speed Ne and a virtual engine torque Te. The virtual engine speed Ne is calculated from an output shaft rotation speed and a change gear ratio of the virtual transmission. The output shaft rotation speed of the virtual transmission is calculated from the vehicle speed and a speed reduction ratio that is determined by the mechanical structure from the virtual transmission to the drive wheels 8. Alternatively, the output shaft rotation speed of the virtual transmission may be calculated from the motor rotation speed of the electric motor 4. The change gear ratio of the virtual transmission is calculated by the later-described transmission model ML13.

In the engine model ML11, the relation between the virtual engine speed Ne and the virtual engine torque Te is prescribed for each accelerator operation amount. That is, the virtual engine torque Te is calculated from the accelerator operation amount and the virtual engine speed Ne. When the virtual engine and the virtual transmission are in a dynamic power shut-off state, that is, when the virtual clutch is in a disengaged state, the engine model ML11 calculates the virtual engine speed Ne from the current virtual engine torque Te and elemental information about the virtual engine. The elemental information about the virtual engine may be stored in the storage device 103 as the data 105.

The clutch model ML12 calculates a torque transmitting gain. The torque transmitting gain is a gain for calculating a torque transmitting degree of the virtual clutch that depends on the clutch operation amount. In the clutch model ML12, the torque transmitting gain is given with respect to the clutch operation amount. The clutch operation amount is acquired from the clutch sensor 15. A torque transmitting gain of 1 indicates that the virtual clutch is in an engaged state. Further, a torque transmitting gain of 0 indicates that the virtual clutch is in the disengaged state. Further, a torque transmitting gain between 0 and 1 indicates that the virtual clutch is in a semi-engaged state. In this way, the state of the virtual clutch is adjusted by the operation of the pseudo clutch operation device 25 by the driver.

The torque transmitting gain is converted into the clutch torque capacity (virtual clutch torque capacity) of the virtual clutch. Then, a virtual clutch torque that is input from the virtual clutch to the virtual transmission is calculated based on the comparison between the virtual clutch torque capacity and the virtual engine torque calculated by the engine model ML11.

The transmission model ML13 calculates the change gear ratio (virtual change gear ratio) of the virtual transmission. The virtual change gear ratio is set for each gear stage that is selected by the shift operation device 24. In the example shown in FIG. 3, a maximal virtual change gear ratio is set for 1st, and the virtual change gear ratio is decreased in the order of 2nd, 3rd, 4th, 5th, and 6th. Further, when the shift operation device 24 is in the neutral (N) state, the virtual change gear ratio is set to zero. The gear stage is determined by the signal from the shift position sensor 14. Furthermore, the transmission model ML13 calculates a virtual transmission torque using the virtual change gear ratio and the virtual clutch torque. The virtual transmission torque is the output shaft torque of the virtual transmission.

The motor torque calculation unit 110 calculates a drive wheel torque from the virtual transmission torque and the speed reduction ratio. Then, the motor torque calculation unit 110 calculates the required motor torque RT by multiplying the calculated drive wheel torque by the speed reduction ratio from the output shaft of the electric motor 4 to the drive wheels 8.

FIG. 2 is referred to again. The motor control unit 120 acquires the required motor torque RT calculated by the motor torque calculation unit 110. The motor control unit 120 controls the inverter 3 such that the electric motor 4 generates the acquired required motor torque RT.

In this way, in the first embodiment, the drive of the vehicle 100 that simulates the drive characteristic of the virtual vehicle is realized by the drive control of the vehicle 100 by the control device 101. The driver can obtain such a driving sensation that the driver is driving the virtual vehicle, by the operation of the accelerator pedal 22, the shift operation device 24, and the pseudo clutch operation device 25.

Next, a sound control of the vehicle according to the first embodiment will be described. The control device 101 performs a sound control for controlling the sound that is output from the speaker 21. Particularly, in the sound control, the control device 101 generates an artificial sound that is changed depending on the virtual engine speed Ne, and outputs the generated artificial sound from the speaker 21. Examples of the artificial sound that is changed depending on the virtual engine speed Ne include a "pseudo engine sound" that simulates the engine sound of the virtual engine of the virtual vehicle. However, in the first embodiment, the artificial sound that is output from the speaker 21 by the sound control is not limited to the pseudo engine sound. For example, the artificial sound may be a pseudo drive sound that simulates the drive sound of a movable body (e.g.; an electric train or an airplane) other than an automobile. As another example, the artificial sound may be music. As an example, the following description will be made, assuming that the artificial sound is the "pseudo engine sound". However, technical characteristics in the present disclosure that will be described below can be applied to other artificial sounds similarly. In the case of general application, it is only necessary to replace the "pseudo engine sound" in the following description with the "artificial sound" when necessary.

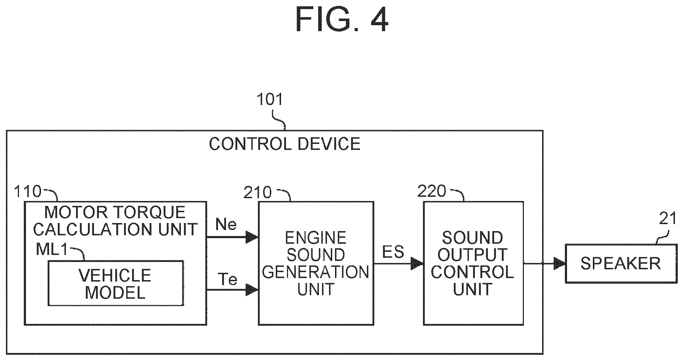

FIG. 4 is a block diagram showing a functional configuration of the control device 101 that is related to the sound control. The control device 101 includes the motor torque calculation unit 110, an engine sound generation unit 210, and a sound output control unit 220, as functional blocks. The functional blocks are realized by the cooperation between the processor 102 and the storage device 103.

The engine sound generation unit 210 (engine sound simulator) is a simulator that generates the pseudo engine sound. The engine sound generation unit 210 acquires at least the virtual engine speed Ne from the motor torque calculation unit 110. In the example shown in FIG. 4, the engine sound generation unit 210 further acquires the virtual engine torque Te from the motor torque calculation unit 110. The virtual engine speed Ne and the virtual engine torque Te are calculated in the engine model ML11 included in the vehicle model ML1. The engine sound generation unit 210 generates the pseudo engine sound using the acquired virtual engine speed Ne and virtual engine torque Te and a sound source. For example, the engine sound generation unit 210 generates the pseudo engine sound such that the frequency is increased or decreased in proportion to the virtual engine speed Ne and the sound pressure is increased or decreased in proportion to the virtual engine torque Te. The sound source is stored in the storage device 103 as the data 105. Particularly, a plurality of sound sources may be stored in the storage device 103. Moreover, the engine sound generation unit 210 may read a sound source that is used, from the sound sources. For example, the engine sound generation unit 210 may be configured to read a sound source corresponding to the vehicle model ML1 that is used by the motor torque calculation unit 110. The engine sound generation unit 210 outputs engine sound data ES indicating the generated pseudo engine sound.

The sound output control unit 220 acquires the engine sound data ES generated by the engine sound generation unit 210. The sound output control unit 220 outputs the pseudo engine sound from the speaker 21, based on the engine sound data ES.

In this way, in the first embodiment, the pseudo engine sound of the virtual engine is output from the speaker 21, by the sound control of the vehicle 100 by the control device 101. The pseudo engine sound is changed depending on the virtual engine speed Ne. The driver hears the pseudo engine sound output from the speaker 21, and thereby, can enjoy such a realistic sensation that the driver is driving the virtual vehicle.

Next, a gear change operation of the vehicle according to the first embodiment will be described. As described above, the vehicle 100 according to the first embodiment is configured to allow the gear change by altering the gear stage that is selected by the shift operation device 24. Particularly, the vehicle 100 includes the shift operation device 24 and the pseudo clutch operation device 25, and the drive control of the vehicle 100 is performed such that the drive characteristic of the pseudo vehicle is simulated, in response to the operation of the shift operation device 24 and the operation of the pseudo clutch operation device 25. Accordingly, the gear change operation of the vehicle 100 can be performed similarly to the conventional manual transmission vehicle.

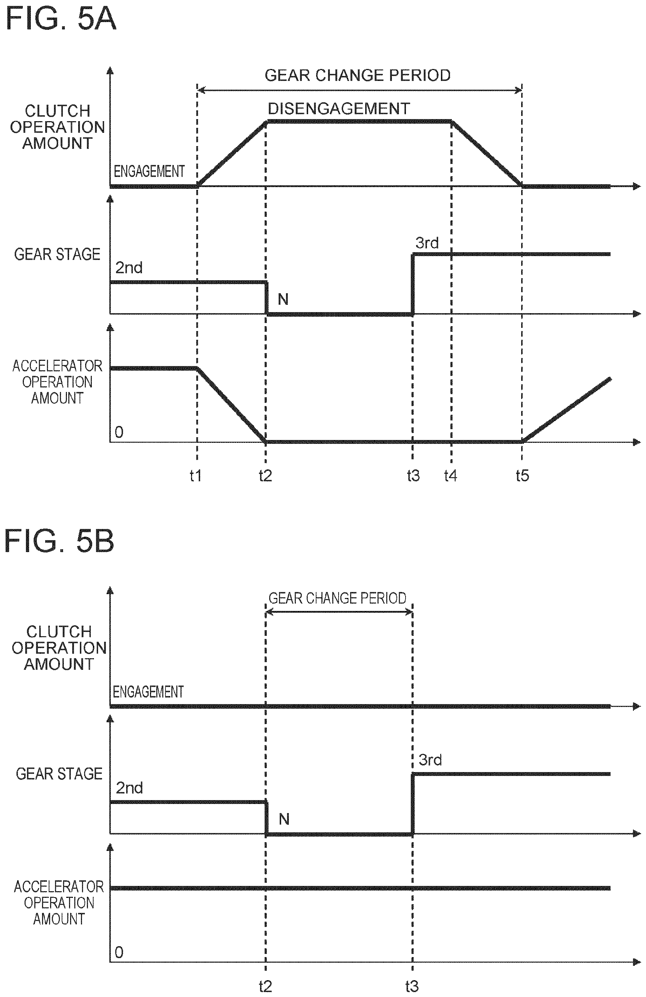

FIG. 5A is a diagram showing a time chart of a basic gear change operation in the vehicle 100 according to the first embodiment. FIG. 5A shows a time chart of the clutch operation amount, the gear stage, and the accelerator operation amount when the gear stage is altered from 2nd to 3rd. In the example shown in FIG. 5A, the gear change operation is started at time t1. First, the driver operates the pseudo clutch operation device 25 such that the virtual clutch is switched from the engaged state to the disengaged state. At the same time, the driver returns the accelerator pedal 22 such that the idling of the engine is avoided. At time t2, the clutch becomes the disengaged state. Next, by operating the shift operation device 24, the driver alters the gear stage from 2nd to the neutral (N), and further alters the gear stage from the neutral to 3rd. At time 3, the gear stage has been altered from the neutral to 3rd. Thereafter, at time t4, the driver operates the pseudo clutch operation device 25, so as to restore the virtual clutch from the disengaged state to the engaged state. Then, at time t5, the clutch has become the engaged state, so that the gear change has been completed. That is, in the example shown in FIG. 5A, a gear change period in the gear change operation is a period from time t1 to time t5.

As shown in FIG. 5A, the gear change operation of the vehicle 100 can be performed similarly to the conventional manual transmission vehicle. In this gear change operation, three operations are necessary in a sequence. The first operation is an operation between time t1 and time t2 in FIG. 5A, and is an operation for switching the virtual clutch from the engaged state to the disengaged state. The second operation is an operation between time t2 and time t3 in FIG. 5A, and is an operation for altering the gear stage. The third operation is an operation between time t4 and time t5 in FIG. 5A, and is an operation for restoring the virtual clutch from the disengaged state to the engaged state. In the conventional manual transmission vehicle including a real clutch, because of mechanical constraints, the gear stage can be altered only when the clutch is in the disengaged state. Therefore, as the gear change operation, the above three operations are necessary. On the other hand, the vehicle 100 according to the first embodiment has no real clutch, and therefore, there is no mechanical constraint. In the vehicle 100 according to the first embodiment, when the above three operations are necessary for the gear change operation, the gear change becomes slow.

Hence, the vehicle 100 according to the first embodiment is configured to allow the alteration of the gear stage by the shift operation device 24 regardless of whether the pseudo clutch operation device 25 is operated. In other words, the vehicle 100 is configured such that the condition for the alteration of the gear stage by the shift operation device 24 does not include a condition that the virtual clutch is in the disengaged state.

FIG. 5B is a diagram showing a time chart of a characteristic gear change operation in the vehicle 100 according to the first embodiment. FIG. 5B shows a time chart of the clutch operation amount, the gear stage, and the accelerator operation amount when the gear stage is altered from 2nd to 3rd, similarly to FIG. 5A. In the example shown in FIG. 5B, the gear change operation is performed when the virtual clutch remains in the engaged state. That is, the driver does not operate the pseudo clutch operation device 25 in the gear change operation. Further, the driver does not need to return the accelerator pedal 22 in the gear change operation. In the example shown in FIG. 5B, the gear change operation is started at time t2. By operating the shift operation device 24, the driver alters the gear stage from 2nd to the neutral (N), and further alters the gear stage from the neutral to 3rd. Then, at time t3, the gear stage has been altered to 3rd, so that the gear change has been completed. That is, in the example shown in FIG. 5B, the gear change period in the gear change operation is a period from time t2 to time t3.

As described with FIG. 5B, the gear change operation of the vehicle 100 can be performed simply by the operation of the shift operation device 24 when the virtual clutch remains in the engaged state. That is, in this case, the gear change operation of the vehicle 100 is completed simply by the second operation. In this way, with the vehicle 100 according to the first embodiment, the driver can quickly perform the gear change. As a result, it is possible to improve the drivability of the vehicle 100.

Next, the permission and non-permission of the alteration of the gear stage in the gear change operation of the vehicle will be described. As described above, the vehicle 100 according to the first embodiment is configured to allow the alteration of the gear stage by the shift operation device 24, regardless of whether the pseudo clutch operation device 25 is operated. Here, a case where the alteration of the gear stage by the shift operation device 24 is performed without the operation of the pseudo clutch operation device 25 (when the virtual clutch remains in the engaged state) will be discussed. In this case, immediately after the gear stage is altered, the virtual engine speed Ne changes to a value corresponding to the gear stage after the alteration. Therefore, when the alteration to an arbitrary gear stage is permitted, there is fear that the virtual engine speed Ne changes excessively greatly, depending on the combination between the motor rotation speed at the time of the alteration and the gear stage after the alteration. The virtual engine speed Ne influences the required motor torque RT, and therefore, when the virtual engine speed Ne changes excessively greatly, there is fear that the stability of the behavior of the vehicle 100 is impaired.

Hence, the vehicle 100 according to the first embodiment may be configured such that only the alteration of the gear stage to a specific gear stage depending on the motor rotation speed of the electric motor 4 is permitted regardless of whether the pseudo clutch operation device 25 is operated. In other words, the vehicle 100 may be configured such that the alteration of the gear stage to a gear stage other than the specific gear stage is not permitted when the pseudo clutch operation device 25 is not operated. The configuration in which the alteration of the gear stage to a gear stage other than the specific gear stage is not permitted does not always mean a configuration in which the alteration to a non-permitted gear stage is physically blocked (for example, a configuration in which the shift lever cannot be inserted into a non-permitted gear stage by the control of an actuator). The configuration in which the alteration of the gear stage to a gear stage other than the specific gear stage is not permitted may be realized by the internal processing in the control device 101. In this case, the operation of the shift operation device 24 to a non-permitted gear stage may be possible. For example, the control device 101 may be configured such that the alteration to a non-permitted gear stage is not reflected in the drive control and the sound control until the non-permitted gear stage is permitted, when the non-permitted gear stage is selected. At this time, the control device 101 may notify the driver that the alteration of the gear stage is not permitted (the alteration of the gear stage is rejected). Further, for example, the control device 101 may be configured such that the virtual engine speed Ne is restricted to a predetermined value and the gear change is not substantially performed until a non-permitted gear stage is permitted, when the non-permitted gear stage is selected. At this time, the control device 101 may notify the driver that the gear change is being substantially performed.

For example, the specific gear stage depending on the motor rotation speed may be a gear stage at which the change in the virtual engine speed Ne falls within a predetermined acceptable range. From this standpoint, the specific gear stage can be given using a map (referred to as a "virtual engine speed map", hereinafter) indicating the value of the virtual engine speed Ne with respect to the motor rotation speed for each gear stage. The virtual engine speed map is determined by the vehicle model ML1. The virtual engine speed map may be stored in the storage device 103 as the data 105.

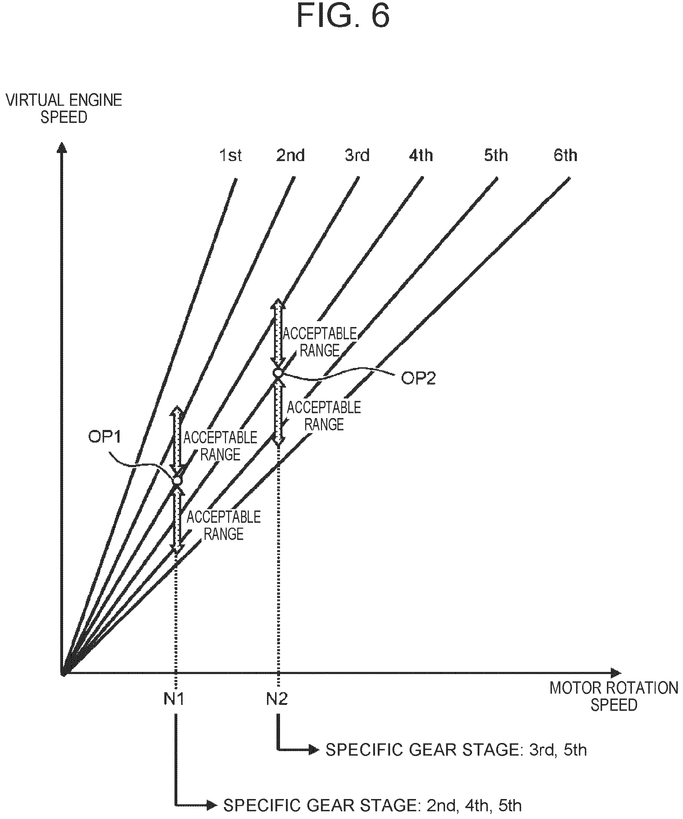

FIG. 6 is a diagram showing an example of the specific gear stage that is given using the virtual engine speed map. In the example shown in FIG. 6, specific gear stages that are given at two operating points OP1 and OP2 on the virtual engine speed map are shown. At the operating point OP1, 3rd is selected as the gear stage, and the motor rotation speed is N1. From gear stages that are included within an acceptable range with respect to the operating point OP1, 2nd, 4th, and 5th are given as the specific gear stage at the operating point OP1. At the operating point OP2, 4th is selected as the gear stage, and the motor rotation speed is N2 higher than N1. From gear stages that are included within an acceptable range with respect to the operating point OP2, 3rd and 5th are given as the specific gear stage at the operating point OP2.

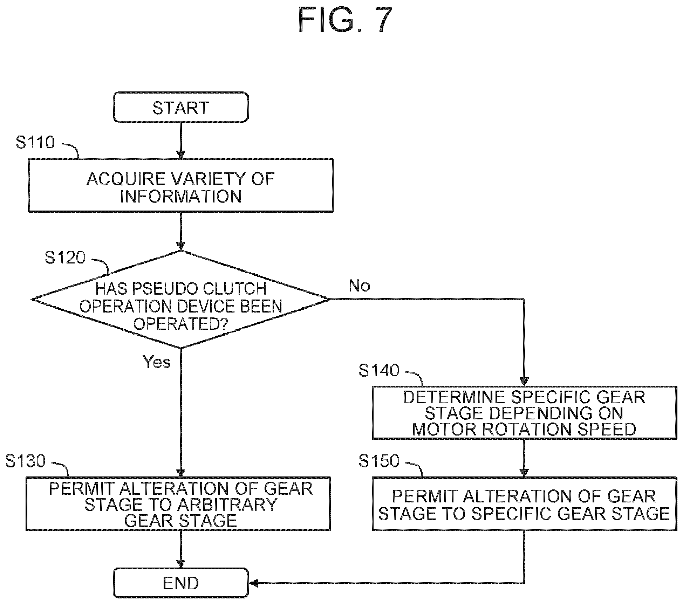

The switching between the permission and the non-permission about the alteration of the gear stage by the shift operation device 24 is realized when the processor 102 of the control device 101 executes a process. FIG. 7 is a flowchart showing a processing flow that is executed by the processor 102 for the switching between the permission and the non-permission about the alteration of the gear stage by the shift operation device 24. The processing flow shown in FIG. 7 may be repeatedly executed with a predetermined processing period.

In step S110, the processor 102 acquires a variety of information. For example, the processor 102 acquires information such as the clutch operation amount and the motor rotation speed, from the signals of the sensors. Further, for example, the processor 102 may acquire information about the state of the virtual clutch, from the vehicle model ML1. Further, for example, the processor 102 may read information about the virtual engine speed map corresponding to the vehicle model ML1, from the storage device 103.

Next, in step S120, the processor 102 determines whether the pseudo clutch operation device 25 has been operated. The processor 102 can determine whether the pseudo clutch operation device 25 has been operated, from information about the clutch operation amount. Alternatively, the processor 102 may determine that the pseudo clutch operation device 25 has been operated, when the virtual clutch is in the disengaged state.

When the processor 102 determines that the pseudo clutch operation device 25 has been operated (step S120; Yes), the processor 102 permits the alteration of the gear stage to an arbitrary gear stage (step S130). After step S130, the processor 102 ends this process that is being executed.

When the processor 102 determines that the pseudo clutch operation device 25 has not been operated (step S120; No), the processor 102 determines the specific gear stage depending on the motor rotation speed (step S140). For example, the processor 102 determines the specific gear stage from the motor rotation speed, using the virtual engine speed map.

After step S140, the processor 102 permits the alteration of the gear stage to the specific gear stage, in step S150. In other words, the processor 102 does not permit the alteration of the gear stage to a gear stage other than the specific gear stage. After step S140, the processor 102 ends this process that is being executed.

As described above, the vehicle 100 according to the first embodiment may be configured to permit the alteration of the gear stage to the specific gear stage depending on the motor rotation speed regardless of whether the pseudo clutch operation device 25 is operated. Thereby, in the case where the alteration of the gear stage by the shift operation device 24 is performed without the operation of the pseudo clutch operation device 25, it is possible to restrain the virtual engine speed Ne from changing excessively greatly. As a result, it is possible to secure the stability of the behavior of the vehicle 100.

The motor rotation speed is proportional to the vehicle velocity. Therefore, as a modification, the specific gear stage may be given depending on the vehicle velocity, instead of the motor rotation speed. For example, the specific gear stage can be given using a map indicating the value of the virtual engine speed Ne with respect to the vehicle velocity for each gear stage.

Next, a gear shift process in the gear change operation of the vehicle will be described. As described above, the vehicle 100 according to the first embodiment is configured to allow the alteration of the gear stage by the shift operation device 24 without the operation of the pseudo clutch operation device 25 (when the virtual clutch is in the engaged state). Meanwhile, in the case where the alteration of the gear stage by the shift operation device 24 is performed without the operation of the pseudo clutch operation device 25, at the timing when the gear stage is altered from the neutral to one gear stage, the virtual engine speed Ne and the required motor torque RT calculated in the motor torque calculation unit 110 changes to values corresponding to the gear stage after the alteration.

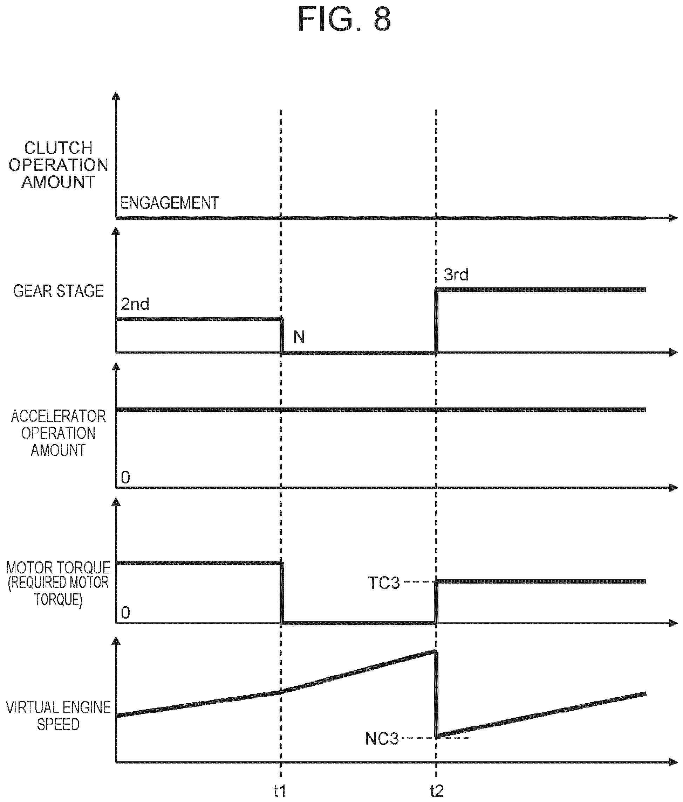

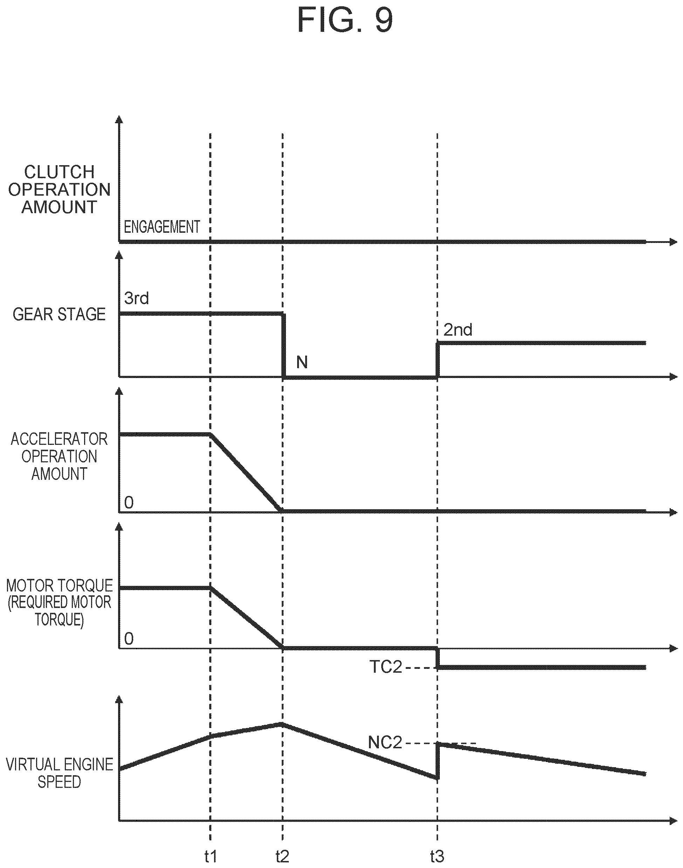

Each of FIG. 8 and FIG. 9 is a diagram showing a time chart when the alteration of the gear stage by the shift operation device 24 is performed without the operation of the pseudo clutch operation device 25, as a comparative example. Each of FIG. 8 and FIG. 9 shows a time chart of the clutch operation amount, the gear stage, the accelerator operation amount, the motor torque (required motor torque RT), and the virtual engine speed Ne. FIG. 8 shows a time chart when the gear stage is altered from 2nd to 3rd. In the example shown in FIG. 8, the gear stage is altered from 2nd to the neutral (N) at time t1, and the gear stage is altered from the neutral to 3rd at time t2. As shown in the example in FIG. 8, at time t2, the virtual engine speed Ne and the motor torque change to values NC3 and TC3 corresponding to the 3rd gear stage, respectively. Further, FIG. 9 shows a time chart when the gear stage is altered from 3rd to 2nd such that engine brake is applied. In the example shown in FIG. 9, the driver returns the accelerator pedal 22 at time t1, and the gear change operation is started at time t2 when the accelerator operation amount has become zero. Then, the gear stage is altered from 3rd to the neutral (N) at time t2, and the gear stage is altered from the neutral to 2nd at time t3. As shown in the example in FIG. 9, at time t3, the virtual engine speed Ne and the motor torque change to values NC2 and TC2 corresponding to the 2nd gear stage, respectively.

In this way, in the comparative examples, at the timing when the gear stage is altered from the neutral to one gear stage, the virtual engine speed Ne and the motor torque (required motor torque RT) change to the values corresponding to the gear stage after the alteration. This phenomenon means that the behavior of the vehicle 100 is a behavior in which the inertia of the virtual engine is not considered. There is fear that this behavior of the vehicle 100 causes the driver to have a strangeness feeling.

Hence, the motor torque calculation unit 110 may be configured to execute a "gear shift process" described below, when the gear stage is altered from the neutral to one gear stage without the operation of the pseudo clutch operation device 25. In the following description, for convenience's sake, the gear stage after the alteration is referred to as a "first gear stage", and the timing when the gear stage is altered from the neutral to the first gear stage is referred to as a "first timing".

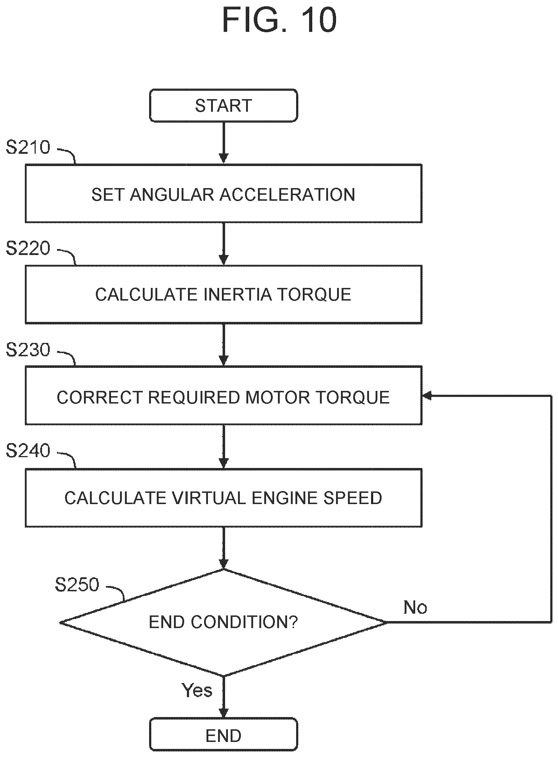

The gear shift process is a process for imitating the behavior of the vehicle 100 due to the inertia of the virtual engine when the gear stage is altered from the neutral to the first gear stage, from the first timing for a certain time period (referred to as a "first time period", hereinafter). In the gear shift process, the motor torque calculation unit 110 performs the correction of the required motor torque RT and the calculation of the virtual engine speed Ne. FIG. 10 is a flowchart showing a processing flow of the gear shift process. The processing flow shown in FIG. 10 is started at the first timing.

In step S210, the motor torque calculation unit 110 sets an angular acceleration (referred to as a "first angular acceleration", hereinafter) of the virtual engine speed Ne in the first time period. The first angular acceleration is different depending on the first gear stage. The first angular acceleration with respect to the first gear stage is determined by the virtual engine speed Ne and the vehicle velocity at the first timing. Accordingly, the setting of the first angular acceleration can be performed using a map (referred to as a "first angular acceleration map", hereinafter) that prescribes the first angular acceleration for the combination between the virtual engine speed Ne and the vehicle velocity. The first angular acceleration map corresponding to each gear stage is determined by the vehicle model ML1. The first angular acceleration map may be previously generated for each of the gear stages that are selectable by the shift operation device 24, and may be stored in the storage device 103 as the data 105. Moreover, the motor torque calculation unit 110 may be configured to read the first angular acceleration map corresponding to the first gear stage, from the storage device 103, and to set the first angular acceleration using the read first angular acceleration map.

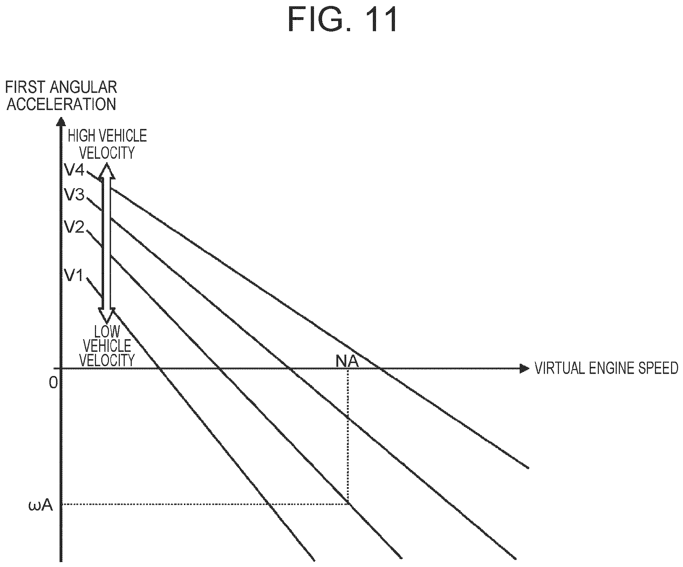

FIG. 11 is a diagram showing an example of the first angular acceleration map. In the first angular acceleration map shown in FIG. 11, the first angular acceleration with respect to the virtual engine speed Ne is prescribed for each of vehicle velocities V1, V2, V3, and V4. In the example shown in FIG. 11, when the virtual engine speed Ne at the first timing is NA and the vehicle velocity at the first timing is V2, the first angular acceleration is set to ωA (< 0). As shown in FIG. 11, the first angular acceleration can be set to a positive value. Further, in the first angular acceleration map, the first angular acceleration is larger in the negative direction as the vehicle velocity is lower. This is because the virtual engine speed Ne corresponding to the first gear stage is smaller as the vehicle velocity is lower. The first angular acceleration map may be generated such that the first angular acceleration is prescribed with respect to the continuous value of the vehicle velocity.

FIG. 10 is referred to again. After step S210, the motor torque calculation unit 110 calculates an inertia torque of the virtual engine that depends on the set first angular acceleration, in step S220. For example, the motor torque calculation unit 110 calculates the inertia torque of the virtual engine, by the simulation with the engine model ML11. Further, for example, the motor torque calculation unit 110 acquires the inertia moment of the virtual engine, and calculates the inertia torque of the virtual engine from the acquired inertia moment and the first angular acceleration. The inertia moment of the virtual engine is determined by the engine model ML11, and may be stored in the storage device 103 as the data 105.

Next, in step S230, the motor torque calculation unit 110 corrects the required motor torque RT. Specifically, the motor torque calculation unit 110 adds the inertia torque calculated in step S220, to the required motor torque RT calculated from the vehicle model ML1. During the execution of the gear shift process, the motor torque calculation unit 110 outputs the required motor torque RT corrected in step S230. The original required motor torque RT calculated from the vehicle model ML1 is a value corresponding to the first gear stage calculated based on the virtual change gear ratio at the first gear stage. Further, when the first angular acceleration is negative, the inertia torque is positive, and when the first angular acceleration is positive, the inertia torque is negative. Accordingly, when the first angular acceleration is negative, the motor torque that is generated in the electric motor 4 by the motor control unit 120 during the execution of the gear shift process overshoots with respect to the value corresponding to the first gear stage, by the quantity of the inertia torque. On the other hand, when the first angular acceleration is positive, the motor torque that is generated in the electric motor 4 by the motor control unit 120 during the execution of the gear shift process undershoots with respect to the value corresponding to the first gear stage, by the quantity of the inertia torque.

Next, in step S240, the motor torque calculation unit 110 calculates the virtual engine speed Ne based on the first angular acceleration set in step S210. That is, the virtual engine speed Ne that is calculated in step S240 is a value resulting from changing the virtual engine speed Ne at the first timing at the first angular acceleration from the first timing. During the execution of the gear shift process, the motor torque calculation unit 110 outputs the virtual engine speed Ne calculated in step S240.

Next, in step S250, the motor torque calculation unit 110 determines whether an end condition for the gear shift process is met. In the case where the end condition is met (step S250; Yes), the motor torque calculation unit 110 ends the gear shift process. In the case where the end condition is not met (step S250; No), the motor torque calculation unit 110 returns to step S230, and repeats the process.

For example, the end condition is a condition that the virtual engine speed Ne calculated in step S240 is a value corresponding to the first gear stage. The value corresponding to the first gear stage is the virtual engine speed Ne that is calculated from the vehicle model ML1. When the gear shift process is ended, the virtual engine speed Ne that is output by the motor torque calculation unit 110 becomes the virtual engine speed Ne that is calculated from the vehicle model ML1. Accordingly, by giving the end condition in this way, it is possible to smoothly change the virtual engine speed Ne, between before and after the gear shift process is ended. This end condition corresponds to a condition that the first time period for which the gear shift process is executed is a time period until the virtual engine speed Ne becomes the value corresponding to the first gear stage. Examples of other end conditions include a condition that the execution time period of the gear shift process exceeds a predetermined time period.

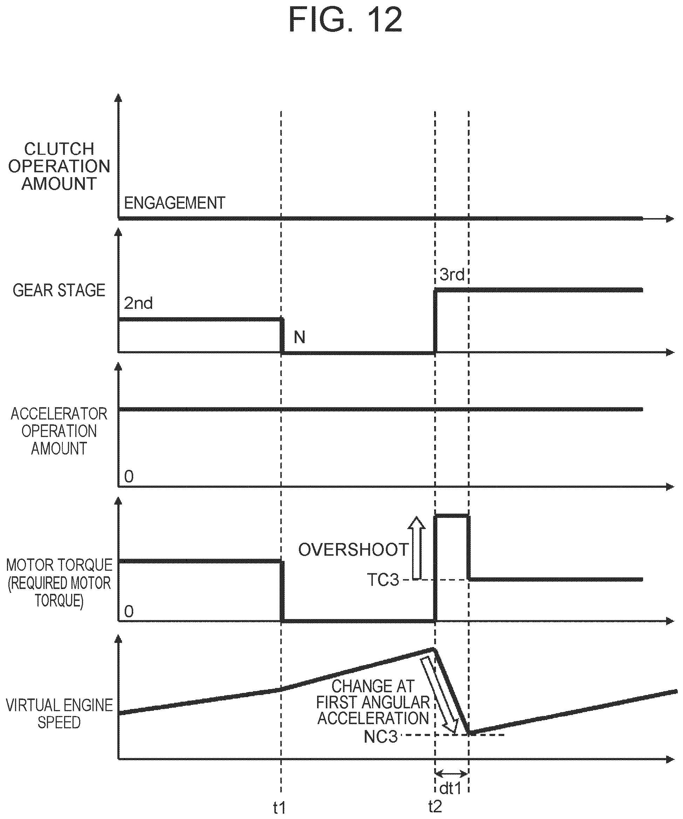

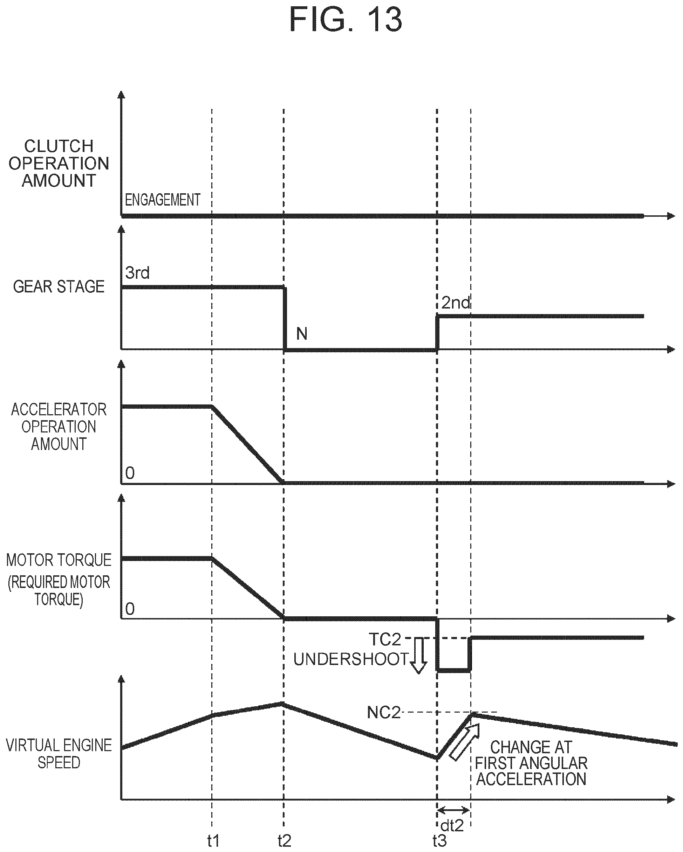

As described above, the motor torque calculation unit 110 may be configured to execute the gear shift process when the gear stage is altered from the neutral to the first gear stage without the operation of the pseudo clutch operation device 25. FIG. 12 and FIG. 13 are diagrams showing time charts in the case where the gear shift process is executed to the comparative examples shown in FIG. 8 and FIG. 9, respectively. FIG. 12 shows a time chart when the gear stage is altered from 2nd to 3rd, similarly to the example shown in FIG. 8. FIG. 13 shows a time chart when the gear stage is altered from 3rd to 2nd such that the engine brake is applied, similarly to the example shown in FIG. 9.

In the example shown in FIG. 12, at time t2 (first timing) when the gear stage is altered from the neutral to 3rd (first gear stage), the virtual engine speed Ne and the motor torque (required motor torque RT) do not change to the values NC3 and TC3 corresponding to the 3rd gear stage. The virtual engine speed Ne changes at the first angular acceleration (< 0) from time t2 for a time period dt1 (first time period). The time period dt1 is a time period until the virtual engine speed Ne becomes the value NC3 corresponding to the 3rd gear stage. Furthermore, the motor torque overshoots with respect to the value TC3 corresponding to the 3rd gear stage from time t2 for the time period dt1.

In the example shown in FIG. 13, at time t3 (first timing) when the gear stage is altered from the neutral to 2nd (first gear stage), the virtual engine speed Ne and the motor torque do not change to the values NC2 and TC2 corresponding to the 2nd gear stage. The virtual engine speed Ne changes at the first angular acceleration (> 0) from time t3 for a time period dt2 (first time period). The time period dt2 is a time period until the virtual engine speed Ne becomes the value NC2 corresponding to the 2nd gear stage. Furthermore, the motor torque undershoots with respect to the value TC2 corresponding to the 2nd gear stage from time t2 for the time period dt2.

As shown in FIG. 12 and FIG. 13, by the execution of the gear shift process, the motor torque of the electric motor 4 overshoots or undershoots from the first timing for the first time period. The driver can perceive the change in the drive power of the vehicle 100, from the first timing for the first time period. Further, by the execution of the gear shift process, the virtual engine speed Ne changes at the first angular acceleration from the first timing for the first time period. The driver can perceive the change in pseudo engine sound from the first timing for the first time period. In this way, the behavior of the vehicle 100 due to the inertia of the virtual engine when the gear stage is altered from the neutral to the first gear stage is imitated. Thereby, it is possible to reduce the strangeness feeling of the driver.

Next, effects of the gear change operation of the vehicle will be described. As described above, in the first embodiment, the gear change operation of the vehicle 100 can be performed simply by operating the shift operation device 24 when the virtual clutch remains in the engaged state. Thereby, the driver can quickly perform the gear change. As a result, it is possible to improve the drivability of the vehicle 100.

Further, as described above, the vehicle 100 according to the first embodiment may be configured to permit the alteration of the gear stage to the specific gear stage depending on the motor rotation speed of the electric motor 4 regardless of whether the pseudo clutch operation device 25 is operated. Thereby, in the case where the alteration of the gear stage by the shift operation device 24 is performed without the operation of the pseudo clutch operation device 25, it is possible to restrain the virtual engine speed Ne from changing excessively greatly. As a result, it is possible to secure the stability of the behavior of the vehicle 100.

Further, as described above, the vehicle 100 according to the first embodiment may be configured such that the gear shift process is executed in the motor torque calculation unit 110 when the gear stage is altered from the neutral to the first gear stage at the first timing without the operation of the pseudo clutch operation device 25. Thereby, it is possible to imitate the behavior of the vehicle 100 due to the inertia of the virtual engine when the gear stage is altered from the neutral to the first gear stage. As a result, it is possible to reduce the strangeness feeling of the driver.

The above two characteristics can be combined.

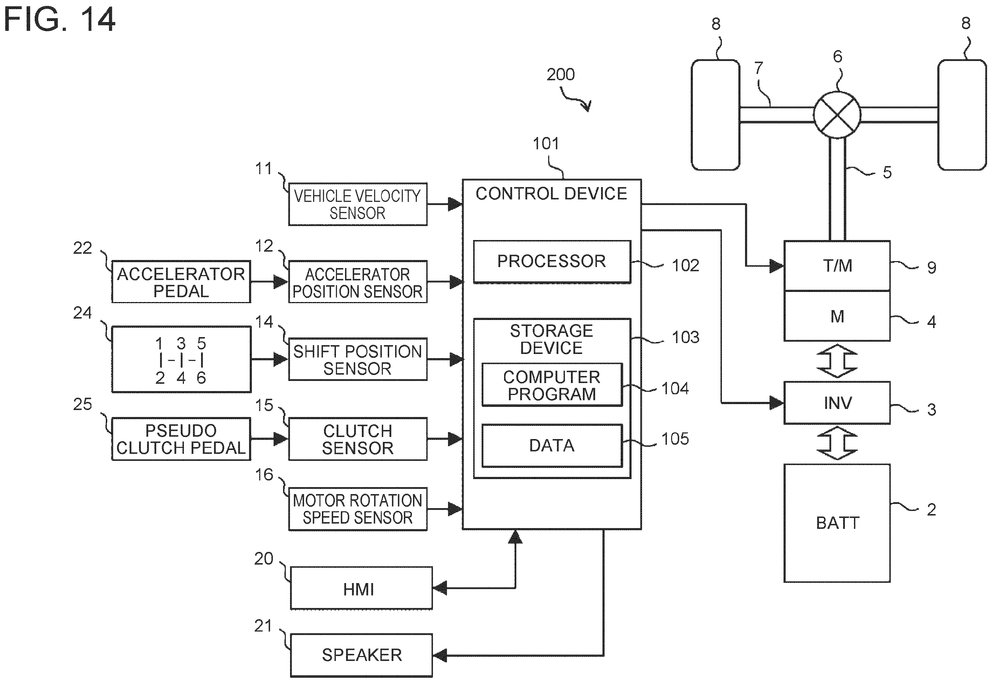

Next, a vehicle in a second embodiment will be described. This vehicle includes a transmission. In the first embodiment, the vehicle 100 includes no real transmission. FIG. 14 is a diagram schematically showing the configuration of a vehicle 200 according to the second embodiment that includes a transmission (T/M) 9.

The transmission 9 is connected to the output shaft of the electric motor 4. Further, the transmission 9 is connected to the differential gear 6 by the propeller shaft 5. The switching of the gear stage of the transmission 9 is performed by the control device 101. The control device 101 is configured to switch the gear stage of the transmission 9 depending on the gear stage selected by the shift operation device 24.

The drive control and the sound control of the vehicle 100 can be performed similarly to those in functional configurations described with FIG. 2 and FIG. 4. Since the vehicle 200 includes the real transmission 9, the motor torque calculation unit 110 is configured to calculate the required motor torque RT such that the virtual change gear ratio of the virtual transmission is realized in consideration of the change gear ratio of the transmission 9. This calculation can be realized by calculating the required motor torque RT such that the change gear ratio of the transmission 9 is included in the speed reduction ratio from the output shaft of the electric motor 4 to the drive wheels.

As in the case of the vehicle 200 in the second embodiment, it is allowable to adopt a configuration in which the real transmission 9 is included. That is, the technical characteristics according to the embodiment can be applied to both of the vehicle 100 including no transmission and the vehicle 200 including the transmission.

The vehicle 100 according to the first embodiment and the vehicle 200 according to the second embodiment may have a control mode (EV mode) of operating with the drive characteristic of an ordinary EV. The vehicle 100 and the vehicle 200 may be configured such that the switching between the control mode of simulating the drive characteristic of the virtual vehicle and the EV mode can be performed by user's operation of the HMI 20. In the EV mode, the operation of the shift operation device 24 and the pseudo clutch operation device 25 may be disabled.

## Claims

1. A vehicle (100; 200) comprising:
an electric motor (4) as a drive source;
a pseudo clutch operation device (25);
a shift operation device (24) configured to be operated for selecting a gear stage; and
a single or plurality of processors (102) configured to simulate a drive characteristic of a virtual vehicle by changing a motor torque of the electric motor (4) in response to at least operation of the pseudo clutch operation device (25) and operation of the shift operation device (24), wherein the single or plurality of processors (102) is configured to permit alteration of the gear stage to a specific gear stage regardless of whether the pseudo clutch operation device (25) is operated, the specific gear stage depending on a motor rotation speed of the electric motor (4).

2. The vehicle (100; 200) according to claim 1, wherein the single or plurality of processors (102) is configured to perform overshoot or undershoot of the motor torque from a first timing for a first time period, when the gear stage is altered from a neutral to a first gear stage at the first timing without the operation of the pseudo clutch operation device (25).

3. The vehicle (100; 200) according to claim 2, wherein:
the virtual vehicle includes a virtual engine; and
the single or plurality of processors (102) is configured to further change a virtual engine speed (Ne) of the virtual engine at a first angular acceleration from the first timing for the first time period.

4. The vehicle (100; 200) according to claim 3, wherein the first time period is a time period until the virtual engine speed (Ne) becomes a value corresponding to the first gear stage.

5. The vehicle (100; 200) according to claim 3, wherein:
the single or plurality of processors (102) is configured to perform the overshoot of the motor torque when the first angular acceleration is negative; and
the single or plurality of processors (102) is configured to perform the undershoot of the motor torque when the first angular acceleration is positive.

6. The vehicle (100; 200) according to claim 5, wherein the single or plurality of processors (102) is configured to perform the overshoot or the undershoot of the motor torque with respect to a value corresponding to the first gear stage, by a quantity of an inertia torque of the virtual engine, the inertia torque of the virtual engine depending on the first angular acceleration.

7. The vehicle (100; 200) according to any one of claims 3 to 6, further comprising a storage device (103) configured to store a map that prescribes the first angular acceleration for a combination between the virtual engine speed (Ne) and a vehicle velocity of the vehicle (100; 200), for each of a plurality of gear stages that is selectable by the shift operation device (24), wherein
the single or plurality of processors (102) is configured to set the first angular acceleration from the virtual engine speed (Ne) and the vehicle velocity at the first timing, using the map for the first gear stage.

8. The vehicle (100; 200) according to any one of claims 3 to 6, wherein the single or plurality of processors (102) is configured to generate an artificial sound and output the artificial sound from a speaker that is equipped in the vehicle (100; 200), the artificial sound being changed depending on the virtual engine speed (Ne).

9. The vehicle (100; 200) according to claim 2, wherein:
the virtual vehicle includes a virtual engine;
the single or plurality of processors (102) is configured to set a first angular acceleration that is an angular acceleration of a virtual engine speed (Ne) of the virtual engine in the first time period; and
the single or plurality of processors (102) is configured to perform the overshoot or the undershoot of the motor torque with respect to a value corresponding to the first gear stage, by a quantity of an inertia torque of the virtual engine, the inertia torque of the virtual engine depending on the first angular acceleration.

10. The vehicle (100; 200) according to claim 9, further comprising a storage device (103) configured to store a map that prescribes the first angular acceleration for a combination between the virtual engine speed (Ne) and a vehicle velocity of the vehicle (100; 200), for each of a plurality of gear stages that is selectable by the shift operation device (24), wherein
the single or plurality of processors (102) is configured to set the first angular acceleration from the virtual engine speed (Ne) and the vehicle velocity at the first timing, using the map for the first gear stage.

11. A vehicle (100; 200) comprising:
an electric motor (4) as a drive source;
a pseudo clutch operation device (25);
a shift operation device (24) configured to be operated for selecting a gear stage; and
a single or plurality of processors (102) configured to simulate a drive characteristic of a virtual vehicle by changing a motor torque of the electric motor (4) in response to at least operation of the pseudo clutch operation device (25) and operation of the shift operation device (24), wherein the single or plurality of processors (102) is configured to perform overshoot or undershoot of the motor torque from a first timing for a first time period, when the gear stage is altered from a neutral to a first gear stage at the first timing without the operation of the pseudo clutch operation device (25).

12. The vehicle (100; 200) according to claim 11, wherein:
the virtual vehicle includes a virtual engine;
the single or plurality of processors (102) is configured to set a first angular acceleration that is an angular acceleration of a virtual engine speed (Ne) of the virtual engine in the first time period; and
the single or plurality of processors (102) is configured to perform the overshoot or the undershoot of the motor torque with respect to a value corresponding to the first gear stage, by a quantity of an inertia torque of the virtual engine, the inertia torque of the virtual engine depending on the first angular acceleration.

13. A vehicle (100; 200) comprising:
an electric motor (4) as a drive source;
a pseudo clutch operation device (25);
a shift operation device (24) configured to be operated for selecting a gear stage; and
a single or plurality of processors (102) configured to simulate a drive characteristic of a virtual vehicle by changing a motor torque of the electric motor (4) in response to at least operation of the pseudo clutch operation device (25) and operation of the shift operation device (24), wherein:
the virtual vehicle includes a virtual engine; and
the single or plurality of processors (102) is configured to change a virtual engine speed (Ne) of the virtual engine at a first angular acceleration from a first timing for a first time period, when the gear stage is altered from a neutral to a first gear stage at the first timing without the operation of the pseudo clutch operation device (25).

14. The vehicle (100; 200) according to claim 13, wherein the first time period is a time period until the virtual engine speed (Ne) becomes a value corresponding to the first gear stage.

15. The vehicle (100; 200) according to claim 13, wherein the single or plurality of processors (102) is configured to generate an artificial sound and output the artificial sound from a speaker that is equipped in the vehicle (100; 200), the artificial sound being changed depending on the virtual engine speed (Ne).
